# EUROPEAN PATENT APPLICATION

(11) **EP 2 018 084 A1**
(43) Date of publication of application: **21.01.2009**
(21) Application number: 08010381.5
(22) Date of filing: 06.06.2008
(51) Int. Cl.: H04W 72/02

(54) **Wireless multipoint voice network**

(30) Priority: 06.06.2007 US 759173
(71) Applicant: Anchor Audio, Inc., Torrance CA 90505 (US)
(72) Inventor: Gentille, Tod Edward, Torrance CA 90505 (US)
(74) Representative: Grünecker, Kinkeldey, Stockmair & Schwanhäusser Anwaltssozietät

(57) **Abstract**

In general, a mobile unit for communicating with other mobile units assigned to a group within a Multipoint Voice Network ("MVN") having a plurality of groups is shown. The mobile unit may include a transmitter, receiver, and controller. The transmitter is enabled to transmit a set of multiple carrier frequencies, where the transmitter is configured to transmit on one frequency chosen from a sub-set of multiple carrier frequencies from the set of multiple carrier frequencies. The sub-set of multiple carrier frequencies corresponds to a group of the plurality of groups. The receiver is configured to receive and demodulate the sub-set of multiple carrier frequencies and the controller configures the receiver to receive and demodulate the sub-set of multiple carrier frequencies that is assigned to the group.

## Description

### BACKGROUND OF THE INVENTION

### 1. Field of Invention

The invention relates to wireless communication networks, and in particular to wireless communication networks utilizing multipoint techniques.

### 2. Related Art

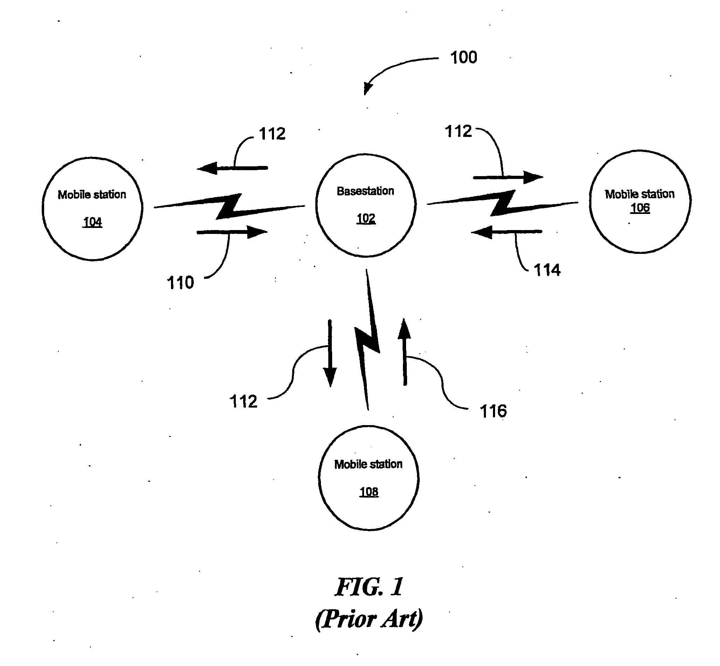

Simple wireless communication systems utilizing a communication network are well known in the art for allowing multiple users to communicate with each other via a simple communication network. In FIG. 1, an example of an implementation of a known wireless communication system 100 utilizing a point-to-multipoint link is shown. The communication system may include a basestation 102 in signal communication with a plurality of mobile stations 104, 106, and 108. In this example, three mobile stations 104, 106, and 108 are shown in signal communication with the basestation 102: however, it is appreciated by those skilled in the art that there may be from one to any plurality of mobile stations in signal communication with the basestation 102. Generally, the number of mobile stations within known systems is limited by the number of frequencies that the basestation is built to demodulate. As an example, the number is typically 4. The wireless communication system 100 utilizes a point-to-multipoint link that enables multiple users possessing individual mobile stations to communicate with each other through the basestation 102. In general, the mobile stations 104, 106, and 108 are capable of transmitting signals on separate frequencies to the basestation 102 and receiving a common broadcast from the basestation 102. As an example of operation, if a user at the first mobile station 104 desires to communicate with another user, or users, at the second mobile station 106 and/or the third mobile station 108, the first mobile station 104 may transmit a first communication signal 110, at a frequency *F₁*, to the basestation 102. The basestation 102 receives the first communication signal 110 and, in response, transmits a broadcast communication signal 112, at a basestation frequency *F₀,* that is broadcast to all the mobile stations 104, 106, and 108. Similarly, if a user at the second mobile station 106 desires to communicate with another user, or users, at the first mobile station 104 and/or third mobile station 108, the second mobile station 106 may transmit a second communication signal 114, at a frequency *F₂,* to the basestation 102. The basestation 102 receives the second communication signal 114 and, in response, transmits the broadcast communication signal 112, which is broadcast to all the mobile stations 104, 106, and 108. Moreover, if a user at the third mobile station 108 desires to communicate with another user, or users, at the first mobile station 104 and/or second mobile station 106, the third mobile station 108 may transmit a third communication signal 116, at a frequency *F₃,* to the basestation 102. The basestation 102 receives the third communication signal 116 and, in response, transmits the broadcast communication signal 112, which is again broadcast to all the mobile stations 104, 106, and 108.
Unfortunately in this example, none of the mobile stations are capable of communicating directly with each other without first being routed through the basestation 102 and the communication is not private because once being routed through the basestation 102, the desired communication is broadcast to all mobile stations. Therefore, there is a need for a new communication system that allows mobile stations to directly communicate with each other in a network without being routed through a basestation.

### SUMMARY

In general, a mobile unit for communicating with other mobile units assigned to a group within a Multipoint Voice Network ("MVN") having a plurality of groups is shown. The mobile unit may include a transmitter enabled to transmit a set of multiple carrier frequencies, where the transmitter is configured to transmit on one frequency chosen from a sub-set of multiple carrier frequencies from the set of multiple carrier frequencies. The sub-set of multiple carrier frequencies corresponds to the group. The mobile unit may also include a receiver configured to receive and demodulate the sub-set of multiple carrier frequencies and a controller in signal communication with the receiver, wherein the controller configures the receiver to receive and demodulate the sub-set of multiple carrier frequencies that is assigned to the group.

In an example of operation, the mobile unit may perform a process that includes numerous steps. The mobile unit may receive a Radio Frequency ("RF") signal that corresponds to a transmitted signal from a second mobile unit corresponding to the plurality of other mobile units in the MVN and mix it down to an Intermediate Frequency ("IF") signal in an RF Stage of the receiver of the mobile unit. The controller may then select an FM receiver module, in an IF Stage of the receiver, from a plurality of FM receiver modules and then the receiver may demodulate the IF signal with the selected FM receiver module.

Other systems, methods and features of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWINGS

The invention can be better understood with reference to the following figures. The components in the figures are not necessarily to scale, emphasis instead being placed upon illustrating the principles of the invention. In the figures, like reference numerals designate corresponding parts throughout the different views.

FIG. 1 shows a block diagram of an example of an implementation of a known wireless communication system utilizing a point-to-multipoint link.

FIG. 2 shows a block diagram of an example of an implementation of a group of mobile stations within a Multipoint Voice Network ("MVN") in accordance with the invention.

FIG. 3 shows a block diagram of an implementation of a MVN having a plurality of groups including Group A described in FIG. 2 in accordance with the invention.

FIG. 4 shows a block diagram of an example of an implementation of a mobile station in accordance with the invention.

FIG. 5 shows a graphical representation of an example of a plot of interleaved groupings of channel frequencies along a frequency axis.

FIG. 6 shows a block diagram of an example of an implementation of a receiver shown in FIG. 4 in accordance with the invention.

FIG. 7 shows a flowchart of an example process for configuring the mobile station of FIG. 4 in accordance with the invention.

FIG. 8 shows a flowchart of an example process performed by the mobile station of FIG. 4 in accordance with the invention.

### DETAILED DESCRIPTION

In the following description of examples of implementations, reference is made to the accompanying drawings that form a part hereof, and which show, by way of illustration, specific implementations of the invention that may be utilized. Other implementations may be utilized and structural changes may be made without departing from the scope of the present invention.

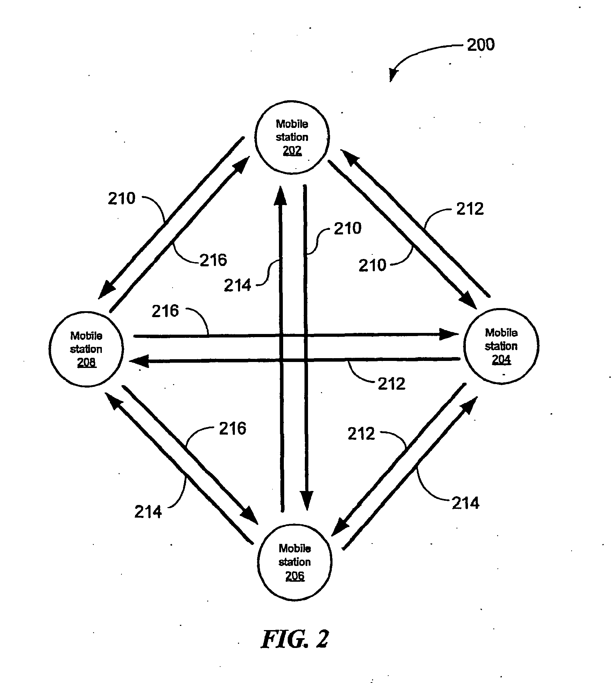

In FIG. 2, an example of an implementation of a group of mobile stations (referred to generally as a "Group") 200 within a Multipoint Voice Network ("MVN") is shown. The MVN is a wireless network utilized for voice communication. However, the MVN may be utilized for general audio content including music and signal alerts (such as sirens, warnings, etc.) Group 200 of the MVN may include a plurality of mobile stations, which for this example will include four mobile stations 202, 204, 206, and 208. However, it is appreciated by those skilled in the art that there may be from one to numerous (i.e., more than four) mobile stations without departing from the scope of this invention. The individual mobile stations are in signal communication with each other, where signal communication refers to any type of communication and/or connection between the mobile stations that allows a given mobile station to pass and/or receive signals and/or information from another mobile station. The communication and/or connection may be along any signal path between the mobile stations that allows signals and/or information to pass from one mobile station to another and includes wireless or wired signal paths. The signal paths may be physical such as, for example, conductive wires, electromagnetic wave guides, attached and/or electromagnetic or mechanically coupled terminals, semi-conductive or dielectric materials or devices, or other similar physical connections or couplings. Additionally, signal paths may be non-physical such as free-space (in the case of electromagnetic propagation) or information paths through digital components where communication information is passed from one device to another in varying digital formats without passing through a direct electromagnetic connection.

Both the MVN and Group 200 utilize multipoint links that enable multiple users possessing individual mobile stations to communicate with each other without the need to pass through a basestation as shown in FIG. 1. Multipoint links are communication links within a multipoint network, which is a communication network having multiple "points" (such as mobile stations) in the network that are capable of receiving transmissions from all other points in the network without requiring a "central point" (such as a basestation).

In general, the mobile stations 202, 204, 206, and 208, in FIG. 2, are configured to transmit on a plurality of separate frequencies corresponding to a set of frequencies designated to the MVN. However, each mobile station 202, 204, 206, and 208 is capable of transmitting on only one carrier frequency for a given transmission. The transmitter of each mobile station is tunable so that this frequency may be selected from a predetermined group of frequencies that corresponds to the assigned group of the mobile station.

Additionally, the mobile stations 202, 204, 206, and 208, in FIG. 2, are configured to receive signals on a plurality of separate frequencies that are a sub-set of frequencies corresponding to frequencies designated to Group 200, which are within the set of frequencies designated to the MVN. In general, the receiver of each mobile station is configured to demodulate multiple frequencies (all of the frequencies that correspond to the frequencies within its assigned group) which correspond to multiple transmitters of the mobile stations 202, 204, 206, and 208 with each transmitter within each mobile station transmitting on only one frequency.

The mobile stations 202, 204, 206, and 208 may each include a controller (not shown) that configures an individual mobile station to receive a specific sub-set of frequencies corresponding to frequencies assigned to Group 200.

As an example of operation, if a user at the first mobile station 202 desires to communicate with another user, or users, at the second mobile station 204, third mobile station 206, and/or fourth mobile station 208, the first mobile station 202 may transmit a first communication signal 210, at a first frequency *F₁*, to the second mobile station 204, third mobile station 206, and/or fourth mobile station 208. Similarly, if a user at the second mobile station 204 desires to communicate with another user, or users, at the first mobile station 202, third mobile station 206, and/or fourth mobile station 208, the second mobile station 204 may transmit a second communication signal 212, at a second frequency *F₂,* to the first mobile station 202, third mobile station 206, and/or fourth mobile station 208. Additionally, if a user at the third mobile station 206 desires to communicate with another user, or users, at the first mobile station 202, second mobile station 204, and/or fourth mobile station 208, the third mobile station 206 may transmit a third communication signal 214, at a third frequency *F₃,* to the first mobile station 202, second mobile station 204, and/or fourth mobile station 208. Moreover, if a user at the fourth mobile station 208 desires to communicate with another user, or users, at the first mobile station 202, second mobile station 204, and/or third mobile station 206, the fourth mobile station 208 may transmit a fourth communication signal 216, at a fourth frequency *F₄,* to the first mobile station 202, second mobile station 204, and/or third mobile station 206.

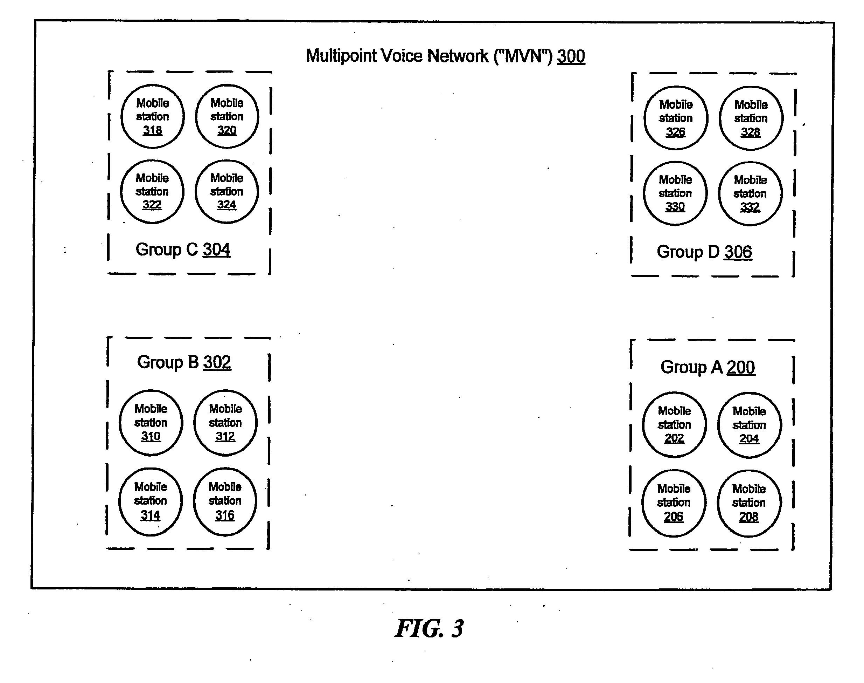

The MVN may include numerous groups. As an example, FIG. 3 shows an implementation of a MVN 300 having a plurality of groups including Group A 200 described in FIG. 2. In this example, the MVN 300 may also include three additional groups (for example Group B 302, Group C 304, and Group D 306). In this example, each group is shown to include four mobile stations such as mobile stations 310, 312, 314, and 316 for Group B 302, mobile stations 318, 320, 322, and 324 for Group C 304, and mobile stations 326, 328, 330, and 332 for Group D 304;, however, it is appreciated that there may be from one to numerous mobile stations and/or groups without departing from the scope of this invention.

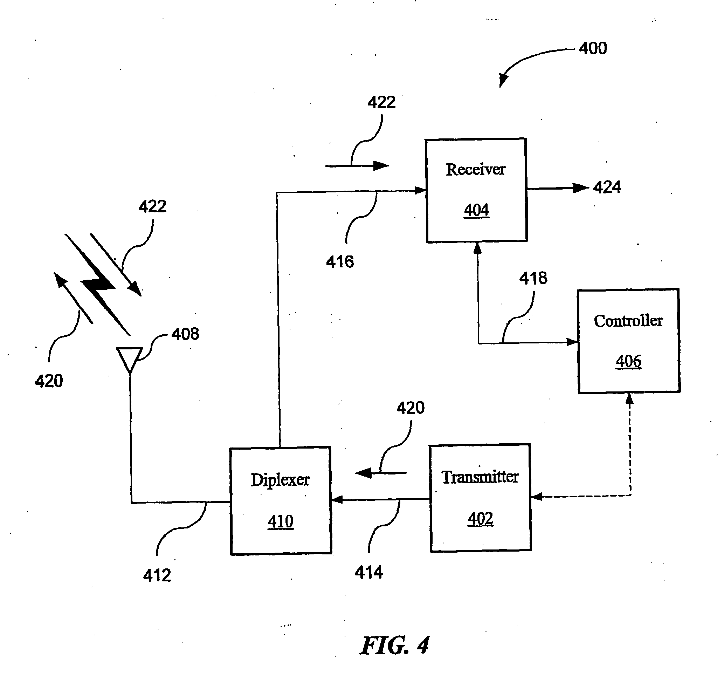

In FIG. 4, an example of an implementation of mobile station 400 is shown. The mobile station 400 may include a transmitter 402, receiver 404, controller 406, antenna 408, and diplexer 410. In this example, the diplexer 410 may be in signal communication with the antenna 408, transmitter 402, and receiver 404 via signal paths 412, 414, and 416, respectively. The controller 406 may be in signal communication with the receiver 404 via signal path 418. Additionally, the controller 406 optionally may also be in signal communication with the transmitter 402.

In an example of operation in a transmission mode, the transmitter 402 is capable of transmitting on a plurality of separate carrier frequencies (as described in FIG. 2 above) corresponding to a set of frequencies designated to the MVN. As such in transmission mode, the transmitter 402 transmits an output signal 420 that is passed through the diplexer 410, antenna 408, and signal paths 414 and 412.

In an example of operation in a reception mode, the mobile station 400 receives an input signal 422 that is passed through the antenna 408, diplexer 410, and signal paths 412 and 416 to the receiver 404. If the input signal 422 includes a carrier frequency that is within the sub-set of frequencies corresponding to frequencies designated for the group for which the mobile station 400 is a member, the receiver 404 receives and demodulates the input signal to produce a received signal 424.

The controller 406 may be utilized to configure the receiver 404 by selecting which sub-set of frequencies, corresponding to the different groups, will be received by the receiver 404. The controller 406 may be part of the receiver 404 or a separate component. The controller 406 may be a programmable electronic device such as, for example, a microprocessor, microcontroller, or similar device, or a mechanical and/or electrical switch.

In this example, the diplexer 410 may be a standard diplexer circuit, hybrid coupler used to diplex the input signal 422 and output signal 420, or similar component. The diplexer 410 may include an attenuator (not shown) that is programmable and is enabled when the transmitter 402 is turned on. The attenuator may be utilized to prevent the transmitter 402 from saturating the front-end (not shown) of the receiver 404. Alternatively, the attenuator may be external to the diplexer 410 and part of the front-end of the receiver 404.

The set of frequencies may be chosen dependent on the design of the MVN. As an example, the MVN may be designed to be a wireless multipoint voice network that utilizes frequency division multiple access ("FDMA") techniques where the set of frequencies are chosen such that the MVN allows a predetermined number of mobile stations to divide the frequency spectrum of the set of frequencies of MVN among the predetermined number of mobile stations so that the mobile stations are able to transmit and receive information on the MVN in a multiplexed fashion. As such, each mobile station is assigned a specific and discrete carrier frequency for communication in the MVN.

As an example turning back to FIG. 3, the MVN 300 is shown having 16 mobile stations 202, 204, 206, 208, 310, 312, 314, 316, 318, 320, 322, 324, 326, 328, 330, and 332 divided into four groups: Group A 200, Group B 302, Group C 304, and Group D 306. In this example, the MVN 300 may be designed to operate using a total set of 16 individual carrier frequencies (also known as "channels" or "channel frequencies") divided into four (4) sub-sets of frequencies where each sub-set is assigned to a specific group. As a result, mobile stations in Group A 200 are configured to only receive carrier frequencies that correspond to the sub-set of frequencies assigned to Group A 200. Similarly, Groups B 302, C 304 and D 306 may only receive carrier frequencies that correspond to the sub-set of frequencies assigned to the corresponding group. However, while the mobile stations are limited to only receiving frequencies corresponding to their assigned group, the mobile stations may still transmit optionally on any frequency within the entire set of frequencies of the MVN.

Using FDMA techniques in this example, each individual mobile station 202, 204, 206, 208, 310, 312, 314, 316, 318, 320, 322, 324, 326, 328, 330, and 332 may transmit on one of the frequencies of the set of 16 channel frequencies. The set of 16 channels may be divided into four sub-sets of channel frequencies corresponding to the four groups: Group A 200, Group B 302, Group C 304 and Group D 306. As a result, each group may be assigned a specific sub-set of four channel frequencies denoted as *F_{group, 1}, F_{group, 2}, F_{group, 3},* and *F_{group, 4}.* Therefore, each mobile station may have a specific assigned frequency channel such as, for example: *F_{A,1}* for mobile station 202 in Group A 200; *F_{A,2}* for mobile station 204 in Group A 200; *F_{A,3}* for mobile station 206 in Group A 200; *F_{A,4}* for mobile station 208 in Group A 200; *F_{B,1}* for mobile station 310 in Group B 302; *F_{B,2}* for mobile station 312 in Group B 302; *F_{B,3}* for mobile station 314 in Group B 302; *F_{B,4}* for mobile station 316 in Group B 302; *F_{C,1}* for mobile station 318 in Group C 304; *F_{C,2}* for mobile station 320 in Group C 320; *F_{C,3}* for mobile station 322 in Group C 304; *F_{C,4}* for mobile station 324 in Group C 304; *F_{D.1}* for mobile station 326 in Group D 306; *F_{D,2}* for mobile station 328 in Group D 306; *F_{D,3}* for mobile station 330 in Group D 306; and *F_{D,4}* for mobile station 332 in Group D 306.

The receivers in the individual mobile stations may then be configured to demodulate only all four channel frequencies that correspond to the group that the mobile station is assigned. As an example, mobile stations 202, 204, 206, and 208 are configured to only demodulate signals having a carrier frequency corresponding to the sub-set of channel frequencies *F_{A,1}, F_{A,2}, F_{A,3},* and *F_{A,4}* assigned to Group A 200. Similarly, mobile stations 310, 312, 314, and 316 are configured to only demodulate signals having a carrier frequency corresponding to the sub-set of channel frequencies *F_{B,1}, F_{B,2}, F_{B,3},* and *F_{B,4}* assigned to Group B 302, mobile stations 318, 320, 322, and 324 are configured to only demodulate signals having a carrier frequency corresponding to the sub-set of channel frequencies *F_{C,1}, F_{C,2}, F_{C,3},* and *F_{C,4}* assigned to Group C 304, and mobile stations 326, 328, 330, and 332 are configured to only demodulate signals having a carrier frequency corresponding to the sub-set of channel frequencies *F_{D,1}, F_{D,2}, F_{D,3},* and *F_{D,4}* assigned to Group D 306.

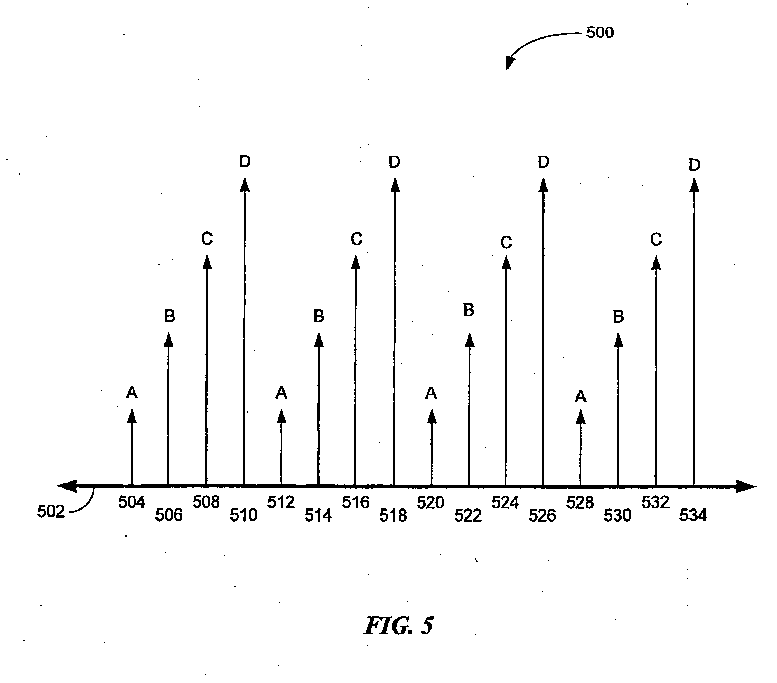

The sub-set of group frequencies may be organized into a frequency plan that is interleaved as shown in FIG. 5. In FIG. 5, an example of a plot 500 of interleaved groupings of channel frequencies along a frequency axis 502 is shown. In this example, the frequency channels, in order of lowest frequency to highest frequency, may be organized as follows: *F_{A,1}* 504, *F_{B,1}* 506, *F_{C,1}* 508, *F_{D,1}* 510, *F_{A,2}* 512, *F_{B,2}* 514, *F_{C,2}* 516, *F_{D,2}* 518, *F_{A,3}* 520, *F_{B,3}* 522, *F_{C,3}* 524, *F_{D,3}* 526, *F_{A,4}* 528, *F_{B,4}* 530, *F_{C,4}* 532, and *F_{D,4}* 534.

As an example of an implementation, the channel frequencies may be chosen from the Ultra-high frequency ("UHF") band with corresponding local oscillator ("LO") frequency *F_{LO}* as shown below in Table 1.

**Table 1**

| **Group** | *F_{group, 1}* | *F_{group, 2}* | *F_{group,3}* | *F_{group,4}* | *F_{LO}* |
|---|---|---|---|---|---|
| A | 945 Mhz | 946.6 Mhz | 948.2 Mhz | 949.8 Mhz | 865 Mhz |
| B | 945.4 Mhz | 947 Mhz | 948.6 Mhz | 950.2 Mhz | 865.4 Mhz |
| C | 945.8 Mhz. | 947.4 Mhz | 949 Mhz | 950.6 Mhz | 865.8 Mhz |
| D | 946.2 Mhz | 947.8 Mhz | 949.4 Mhz | 951 Mhz | 866.2 Mhz |

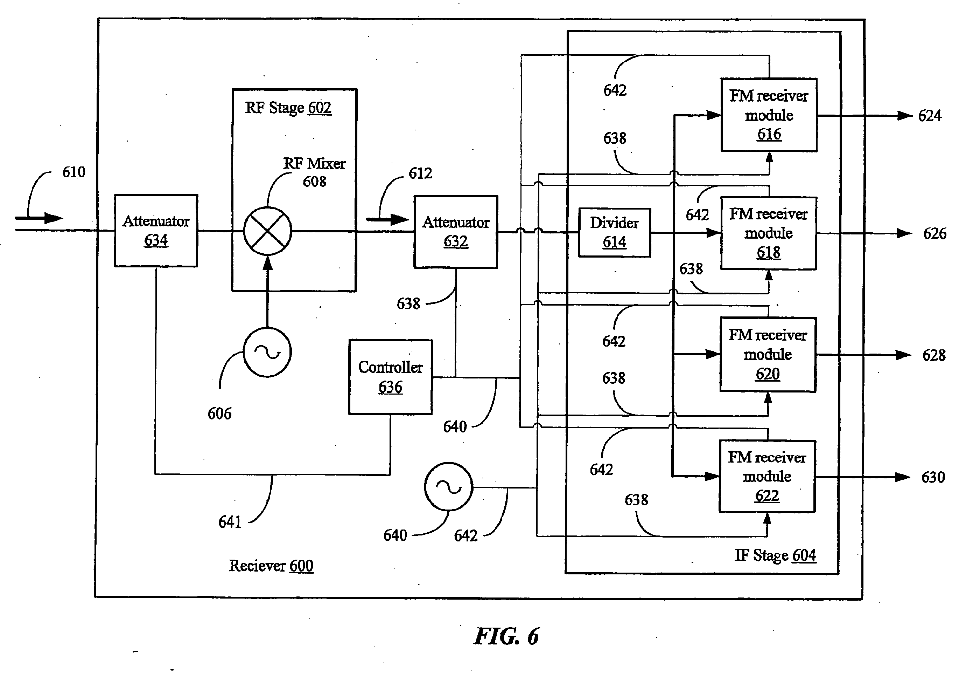

Turning back to FIG. 4, the receiver 404 may be implemented as a two-stage receiver having a radio frequency ("RF") stage and an intermediate-frequency ("IF") stage as shown in FIG. 6. In FIG. 6, a receiver 600 includes a RF stage 602, IF stage 604, and RF LO 606. The RF stage 602 may include a mixer 608, in signal communication with the RF LO 606 capable of demodulating RF input signals 610 at an RF frequency band (such as the channel frequencies listed in Table 1) to IF signals 612 at an IF frequency band such as, for example, 76 to 87 Mhz.

The IF stage 604 may include a divider circuit 614 and multiple frequency modulation ("FM") receivers 616, 618, 620, and 622 for demodulating the IF signals 612 into corresponding baseband output signals 624, 626, 628, and 630. The RF stage 602 and IF stage 604 may be in signal communication via an optional variable attenuator 632. There may also be a second optional variable attenuator 634 in signal communication with both the RF stage 602 and diplexer 410, FIG. 4. A controller 636 may also be in signal communication with the first attenuator 632 and the plurality of FM receivers 616, 618, 620, and 622, and the second attenuator 634 via signal paths 638, 640, and 641, respectively. Additionally, a second RF LO 640 may be in signal communication with the FM receivers 616, 618, 620, and 622, via signal path 642.

The controller 636 may be a microcontroller, processor, microprocessor, digital signal processor ("DSP"), application specific integrated circuit ("ASIC"), or other similar device. The controller 636 may control the FM receivers 616, 618, 620, and 622 and attenuators 632 and 634 via a serial peripheral interface ("SPI"). It is appreciated by those skilled in the art that that SPI is only an example and other interfaces or protocols may also be used.

In this example, the attenuators 632 and 634 are programmable variable attenuators. The attenuators 634 and 632 may be switchable attenuators that prevent the receiver low noise amplifiers ("LNAs") (not shown) from being saturated both in the RF front stage 602 and/or the individual FM receiver module front ends (not shown), respectively. In the example of the RF front stage 602, attenuator 634 may be in signal communication with an LNA (not shown) either connected in front of, or as part of, the RF front stage 602.

In an example of operation, the receiver 600 receives RF input signals 610 at an RF frequency band (such as the channel frequencies listed in Table 1) at the optional variable attenuator 634. If present, the variable attenuator 634 prevents saturation of the RF Mixer 608 in the RF Stage 602 by attenuating the RF input signals 610 if their power amplitude is too high for the RF Mixer 608. The resulting attenuated RF signals are then passed to the RF Mixer 608. The RF Mixer 608 mixes the attenuated RF signals with a frequency reference signal from the RF LO 606 to produce the IF signals 612 which have been mixed down to an IF frequency band such as, for example, 76 to 87 Mhz. The IF signals 612 are then passed through the other optional variable attenuator 632 to the divider 614 of the IF Stage 604. If present, the variable attenuator 632 prevents saturation of the front ends of the respective FM receiver modules 616, 618, 620, and 622 by attenuating the IF input signals 612 if their power amplitude is too high for the FM receiver modules 616, 618, 620, and 622. The resulting attenuated IF signals are then passed through the divider 614 and then to the FM receiver modules 616, 618, 620, and 622. The FM receiver modules 616, 618, 620, and 622 receive the IF signals and demodulate them to produce the output baseband signals 624, 626, 628, and 630, respectively.

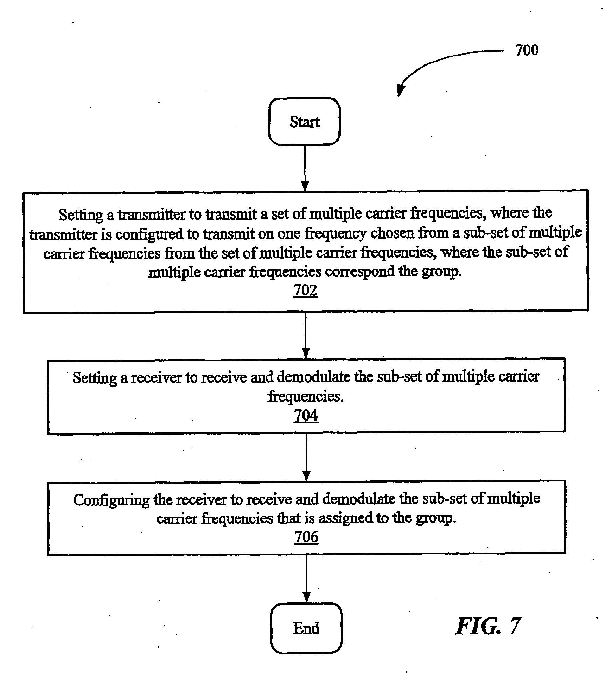

In FIG. 7 a flowchart 700 is shown that illustrates an example process for configuring the mobile unit 400, FIG. 4, for operation. The process begins in step 702, where the transmitter is set to transmit a set of multiple carrier frequencies, wherein the transmitter is configured to transmit on one frequency chosen from a sub-set of multiple carrier frequencies from the set of multiple carrier frequencies. In this example, the sub-set of multiple carrier frequencies corresponds to the group.

In step 704, the receiver is set to receive and demodulate the sub-set of multiple carrier frequencies and, in step 706, the receiver is configured to receive and demodulate the sub-set of multiple carrier frequencies that is assigned to the group.

In general, the receiver is set to receive and demodulate the sub-set of multiple carrier frequencies that have been predetermined to correspond to the group. Similarly, the transmitter is set to utilize a predetermined frequency chosen from the sub-set of multiple carrier frequencies as described in FIG. 5.

Configuring the receiver to receive and demodulate the sub-set of multiple carrier frequencies that is assigned to the group includes selecting an FM receiver module to utilize from a plurality of FM receiver modules.

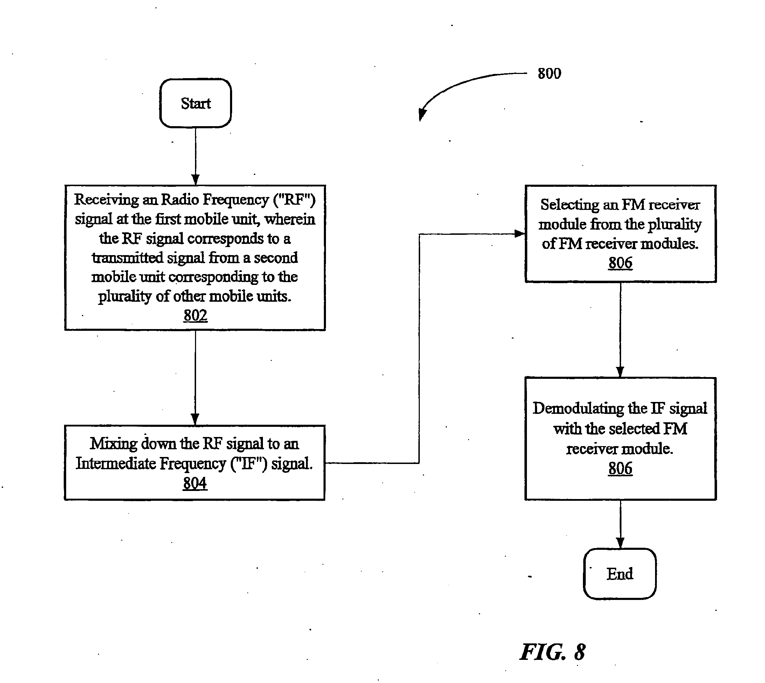

As an example of operation, in FIG. 8 a flowchart 800 is shown that illustrates an example process performed by mobile unit 400, FIG. 4, in operation. The process begins in step 802, where the mobile unit 400 receives an RF signal. The RF signal corresponds to a transmitted signal from a second mobile unit corresponding to the plurality of other mobile units in the MVN. In step 804, the RF Stage 602, FIG. 2, of the receiver 600 in the mobile unit 400 mixes down the RF signal to an IF signal. In step 806, the controller selects an FM receiver module in the IF Stage 604 from the plurality of FM receiver modules and, in step 806, the IF Stage 604 demodulates the IF signal with the selected FM receiver module. The process then ends.

It will be understood that the foregoing description of numerous implementations has been presented for purposes of illustration and description. It is not exhaustive and does not limit the claimed inventions to the precise forms disclosed. Modifications and variations are possible in light of the above description or may be acquired from practicing the invention. The claims and their equivalents define the scope of the invention.

## Claims

1. A mobile unit for communicating with other mobile units assigned to a group within a Multipoint Voice Network ("MVN") having a plurality of groups, the mobile unit comprising:
a transmitter enabled to transmit a set of multiple carrier frequencies, wherein the transmitter is configured to transmit on one frequency chosen from a sub-set of multiple carrier frequencies from the set of multiple carrier frequencies, wherein the sub-set of multiple carrier frequencies correspond to the group;
a receiver configured to receive and demodulate the sub-set of multiple carrier frequencies; and
a controller in signal communication with the receiver, wherein the controller configures the receiver to receive and demodulate the sub-set of multiple carrier frequencies that is assigned to the group.

2. The mobile unit of claim 1, wherein the transmitter and receiver operate utilizing FDMA techniques.

3. The mobile unit of claim 2, wherein the receiver includes an RF stage and an IF stage that includes a plurality ofFM receiver modules.

4. The mobile unit of claim 3, wherein the IF stage further includes a divider in signal communication with the RF Stage and the plurality of FM receiver modules.

5. The mobile unit of claim 4, wherein the controller selects an FM receiver module from the plurality of FM receiver modules, wherein the FM receiver module is configured to receive a carrier frequency from the sub-set of multiple carrier frequencies.

6. The mobile unit of any of claims 1, 2, 3, 4, and 5, including an attenuator within the receiver configured to prevent an RF stage in the receiver from being saturated.

7. The mobile unit of claim 6, wherein the RF stage includes a low noise amplifier, wherein saturation in the low noise amplifier is prevented by the attenuator.

8. A method for communicating between mobile units assigned to a group within a Multipoint Voice Network ("MVN") having a plurality of groups, the method comprising:
setting a transmitter to transmit a set of multiple carrier frequencies, wherein the transmitter is configured to transmit on one frequency chosen from a sub-set of multiple carrier frequencies from the set of multiple carrier frequencies, wherein the sub-set of multiple carrier frequencies corresponds to the group;
setting a receiver to receive and demodulate the sub-set of multiple carrier frequencies; and
configuring the receiver to receive and demodulate the sub-set of multiple carrier frequencies that is assigned to the group.

9. The method of claim 8, wherein setting a receiver to receive and demodulate the sub-set of multiple carrier frequencies includes predetermining the sub-set of multiple carrier frequencies corresponding to the group.

10. The method of claim 9, wherein setting a transmitter to transmit a set of multiple carrier frequencies includes predetermining the one frequency chosen from the sub-set of multiple carrier frequencies.

11. The method of claim 10, wherein configuring the receiver to receive and demodulate the sub-set of multiple carrier frequencies that is assigned to the group includes:
mixing down the Radio Frequency ("RF") signal to an Intermediate Frequency ("IF") signal in an RF Stage of the receiver; and
demodulating the IF signal with an IF Stage having a plurality of FM receiver modules.

12. The method of claim 11, wherein demodulating the IF signal includes selecting a FM receiver module of a plurality of FM receiver modules to receive and demodulate the IF signal.

13. The method of claim 12, wherein setting a transmitter to transmit and a receiver to receive includes utilizing FDMA techniques.

14. A method for communicating between a first mobile unit and a plurality of other mobile units assigned to a group within a Multipoint Voice Network ("MVN") having a plurality of groups, the method comprising:
receiving a Radio Frequency ("RF") signal at the first mobile unit, wherein the RF signal corresponds to a transmitted signal from a second mobile unit corresponding to the plurality of other mobile units;
mixing down the RF signal to an Intermediate Frequency ("IF") signal;
selecting an FM receiver module from a plurality of FM receiver modules of an IF Stage of the first mobile unit; and
demodulating the IF signal with of the selected FM receiver module.

15. The method of claim 14, wherein setting a transmitter to transmit and a receiver to receive includes utilizing FDMA techniques.
